# EUROPEAN PATENT APPLICATION

(11) **EP 4 471 950 A1**
(43) Date of publication of application: **04.12.2024**
(21) Application number: 22924128.6
(22) Date of filing: 09.12.2022
(51) Int. Cl.: H01M 50/204, H01M 50/222, H01M 50/224, H01M 50/342, H01M 50/35, H01M 50/367, H01M 50/383

(54) **BATTERY PACK**

(30) Priority: 27.01.2022 JP 2022010610
(71) Applicant: Panasonic Energy Co., Ltd., Osaka 570-8511 (JP)
(72) Inventor: TAKEDA, Kensaku, Kadoma-shi, Osaka 571-0057 (JP); WAKABAYASHI, Takeaki, Kadoma-shi, Osaka 571-0057 (JP)
(74) Representative: Novagraaf International SA
(86) International application number: PCT/JP2022/045516
(87) International publication number: WO 2023/145277

(57) **Abstract**

A battery pack includes a secondary battery cell having a surface including a safety valve, a housing including a first case and a second case which are divided, and a fire-resistant plate disposed inside the housing and on a surface of the housing facing the surface of the secondary battery cell. The housing includes a fire-resistant-plate-disposition surface on which the fire-resistant plate is disposed inside the housing, and a hole region in which first through-holes are provided therein. The hole region is provided in each of side surfaces of the housing intersecting the fire-resistant-plate-disposition surface at both sides of the fire-resistant-plate-disposition surface. The parting line is positioned at a middle of the fire-resistant-plate-disposition surface of the housing away from corners of the fire-resistant-plate-disposition surface of the housing, and positioned along a perimeter of the hole region in each of the side surfaces of the housing.

## Description

### TECHNICAL FIELD

The present disclosure relates to a battery pack.

### BACKGROUND ART

A battery pack including secondary battery cells connected in series and/or parallel to one another are used as, for example a power source for portable electric devices such as electric cleaners and electric tools, or a stationary power source for server backup or as home, business, or factory stationary power source devices in electricity storage applications, or used as power sources for driving power-assisted bicycles or power sources for driving electric scooters, electric carts, or vehicles such as hybrid vehicles and electric vehicles (for example, PTLs 1 and 2). Such a battery pack often includes a box-shaped exterior case forming the outer form of the battery pack. The box-shaped exterior case may be divided into two sections, an upper section and a lower section.

The secondary battery cells used in the battery pack may be lithium-ion secondary batteries. The lithium-ion secondary batteries may cause an unsafe event accompanying emitting smoke or catching fire due to abnormalities such as bolt penetration during a collision. Such an unsafe event occurring in a battery pack may provide a risk of fire caught by a secondary battery cell disposed inside being released to the outside of the battery pack.

### CITATION LIST

### Patent Literature

PTL 1: International Publication No. 2019/163550
PTL 2: International Publication No. 2020/196267

### SUMMARY

A battery pack includes a secondary battery cell having a surface including a safety valve, a housing including a first case and a second case which are divided, and a fire-resistant plate disposed inside the housing and on a surface of the housing facing the surface of the secondary battery cell. The housing includes a fire-resistant-plate-disposition surface on which the fire-resistant plate is disposed inside the housing, and a hole region in which first through-holes are provided therein. The hole region is provided in each of side surfaces of the housing intersecting the fire-resistant-plate-disposition surface at both sides of the fire-resistant-plate-disposition surface. The parting line is positioned at a middle of the fire-resistant-plate-disposition surface of the housing away from corners of the fire-resistant-plate-disposition surface of the housing, and positioned along a perimeter of the hole region in each of the side surfaces of the housing.

The battery pack prevents flame leakage to outside at the occurrence of an abnormality.

### BRIEF DESCRIPTION OF DRAWINGS

FIG. 1 is a perspective view of a battery pack according to an exemplary embodiment of the present disclosure.
FIG. 2 is an exploded perspective view of the battery pack shown in FIG. 1 for illustrating a state in which a label is removed from the battery pack.
FIG. 3 is a side view of the battery pack in FIG. 2 for illustrating a state in which a first case and a second case of the battery pack are disassembled.
FIG. 4 is an exploded perspective view of the battery pack shown in FIG. 1.
FIG. 5 is an exploded perspective view of the battery pack shown in FIG. 4 in which a battery holder of the battery pack is disassembled.
FIG. 6 is a vertical cross-sectional view of the battery pack along a line VI-VI shown in FIG. 1.
FIG. 7 is a horizontal cross-sectional view of the battery pack along a line VII-VII shown in FIG. 1.
FIG. 8 is a perspective view of a battery pack according to Comparative Example 1.
FIG. 9 is a perspective view of a battery pack according to Comparative Example 2.

### DESCRIPTION OF EMBODIMENT

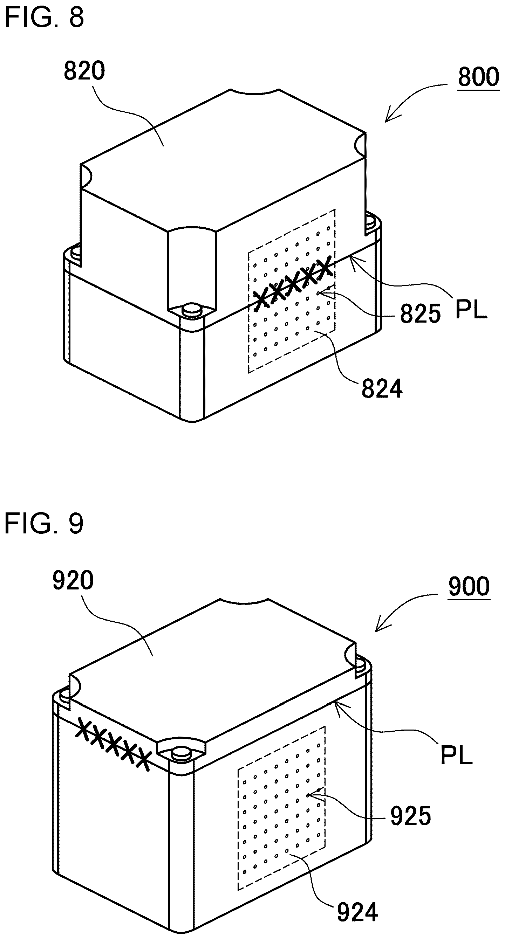

In order to prevent fire caught by a secondary battery cell disposed inside a battery pack from leaking to the outside, if an abnormality occurs in the battery pack to generate a flame inside the battery pack, the flame is required to be prevented from leaking from an exterior case to the outside. In order to prevent fire leakage from the exterior case, thermal energy other than flames is discharged to the outside of the exterior case. For example, it is conceivable that, like battery pack 800 illustrated in the perspective view in FIG. 8, flame-discharge unit 824 including a plurality of flame extinguishing holes 825 is provided in a side surface of exterior case 820. Thus, high temperature gas inside the battery pack is discharged little by little from each of flame extinguishing holes 825 to the outside, which could become a countermeasure against fire leakage.

However, until the discharge of high temperature gas is completed, high pressure is continuously generated inside battery pack 800 due to gas filling therein, and internal pressure is discharged from flame extinguishing holes 825 of smoke-discharge unit 824 of exterior case 820. Thus, a configuration in which a parting line PL as an expression of a joint between upper and lower cases constituting exterior case 820, that is, a mating surface divides smoke-discharge unit 824 provides a risk of breakage of the parting line PL due to the internal pressure.

In contrast, like battery pack 900 illustrated in FIG. 9, in the case that the parting line PL is provided in an upper part of exterior case 920, the parting line PL becomes closer to corners of box-shaped exterior case 920. However, thermal energy inside exterior case 920 tends to concentrate on the corners due to convention, which may result in breakage of exterior case 920 at the parting line PL and thereby producing fire leakage from the breakage point.

A battery pack according to an aspect of the present disclosure includes: at least one secondary battery cell having a surface including a safety valve; a housing including a first case and a second case into which the housing is divided, the housing accommodating the at least one secondary battery cell therein, the first case and the second case being joined to each other at a parting line; and a fire-resistant plate disposed inside the housing and on a surface of the housing facing the surface of the at least one secondary battery cell. The housing includes: a fire-resistant-plate-disposition surface on which the fire-resistant plate is disposed inside the housing; and a hole region in which a plurality of first through-holes are provided therein, the hole region being provided in a pair of side surfaces of the housing intersecting the fire-resistant-plate-disposition surface at both sides of the fire-resistant-plate-disposition surface, respectively. The parting line is positioned at a middle of the fire-resistant-plate-disposition surface of the housing away from corners of the fire-resistant-plate-disposition surface of the housing, and positioned along a perimeter of the hole region in the each of the side surfaces of the housing.

In a power supply device according to another aspect of the present disclosure, in the above aspect, the hole region may be provided in the second case.

In a power supply device according to still another aspect of the present disclosure, in any aspect above, the each of the side surfaces of the housing may include a margin provided along the perimeter of the hole region.

In a power supply device according to still another aspect of the present disclosure, in any aspect above, the parting line may be a straight line in the fire-resistant-plate-disposition surface of the housing and may be bent to protrude in the each of the pair of side surfaces of the housing and to be connected continuously with the straight line.

In a power supply device according to still another aspect of the present disclosure, in any aspect above, the parting line may be positioned at a middle of the fire-resistant-plate-disposition surface of the housing in a vertical direction.

A power supply device according to still another aspect of the present disclosure, in any aspect above, may further include a pair of through-hole plates disposed away from the side surfaces inside the housing, respectively.

In a power supply device according to still another aspect of the present disclosure, in any of the above-mentioned aspects, each through-hole plates may have a plurality of second through-holes provided therein, the second through-holes deviating from the first through-holes. In the above-described configuration, if high pressure gas is generated inside the battery pack, the breakage of the hole region due to the high pressure gas is avoided with the reinforced pair of the side surfaces, and the high pressure gas is discharged to the outside through the second through-holes to reduce heat and pressure, and furthermore, the vigor of the high pressure gas is further weakened by displacing the second through-holes from the first through-holes and the high pressure gas is discharged to the outside, whereby flame leakage to the outside can be substantially prevented.

In a power supply device according to still another aspect of the present disclosure, in any of the above-mentioned aspects, the through-hole plates may be made of metal plates.

A power supply device according to still another aspect of the present disclosure, in any of the above-mentioned aspects, may further includes a label disposed on one of the pair of side surfaces of the housing such that the label overlaps the hole region. In this configuration, the first through-holes are closed to prevent the entry of foreign substances. If pressure inside the battery pack increases, the label is broken by the high pressure, whereby high pressure gas inside the battery pack is discharged through the first through-holes.

A power supply device according to still another aspect of the present disclosure, in any of the above-mentioned aspects, may further include a battery holder holding the at least one secondary battery cell.

In a power supply device according to still another aspect of the present disclosure, in any of the above-mentioned aspects, the fire-resistant plate may be made of mica.

Exemplary embodiments of the present disclosure will be described below based on the drawings. Note that the following embodiments are merely examples to specify technical ideas of the present invention, and the present invention is not limited to the followings. In addition, the present specification is not definitely presented to limit members described in the claims to corresponding members described in the embodiments. In particular, dimensions, materials, shapes, relative positions, and the likes of constituents described in the embodiments are only presented as explanatory examples, and are not intended to limit the scope of the present invention, unless otherwise specified. Sizes, positional relationships, and the likes of members illustrated in the drawings are sometimes exaggerated for clarifying the description. Furthermore, in the following description, identical names and reference numerals indicate identical or similar members, and detailed description thereof are omitted as appropriate. In addition, regarding elements constituting the present disclosure, a plurality of elements may be composed of an identical member, so that one member functions as a plurality of elements, or conversely, a function of one member may be shared and implemented by a plurality of members.

The battery pack according to the present disclosure can be used, for example, as power sources for portable electric devices such as electric cleaners and electric tools, or used as stationary power sources for server backup or as home, business, or factory stationary power source devices in electricity storage applications, or used as power sources for driving power-assisted bicycles or power sources for driving electric scooters, electric carts, or vehicles such as hybrid vehicles and electric vehicles. Hereinafter, a battery pack to be used as a power source for portable electric devices will be described as one embodiment according to the present disclosure.

### Exemplary Embodiment 1

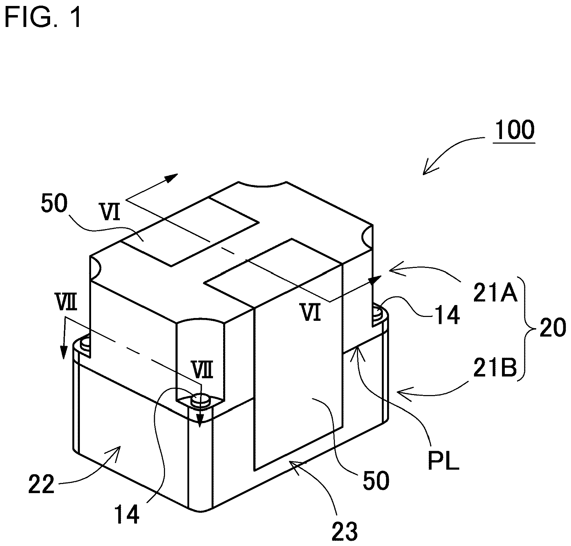

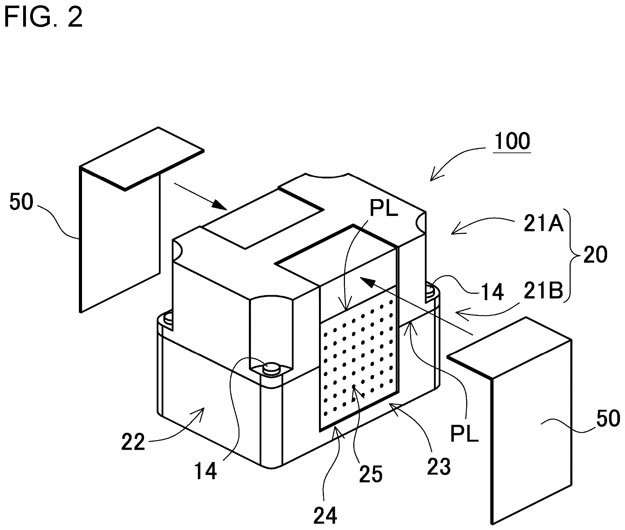

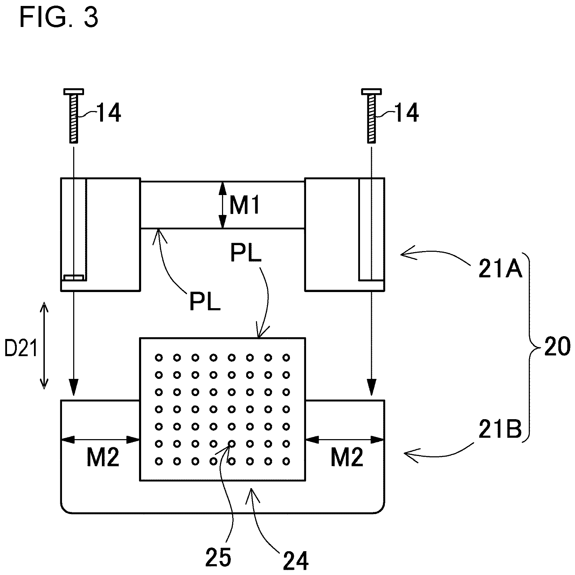

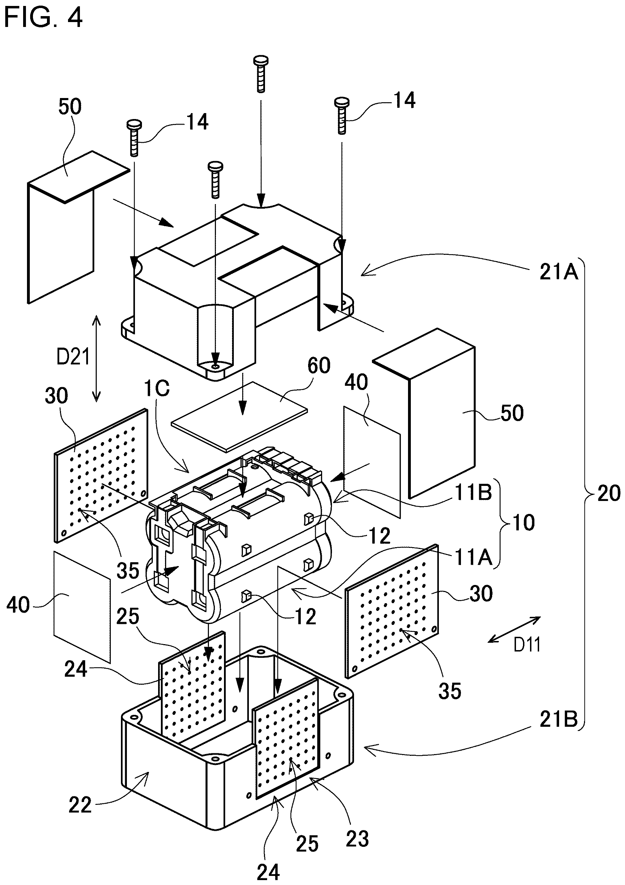

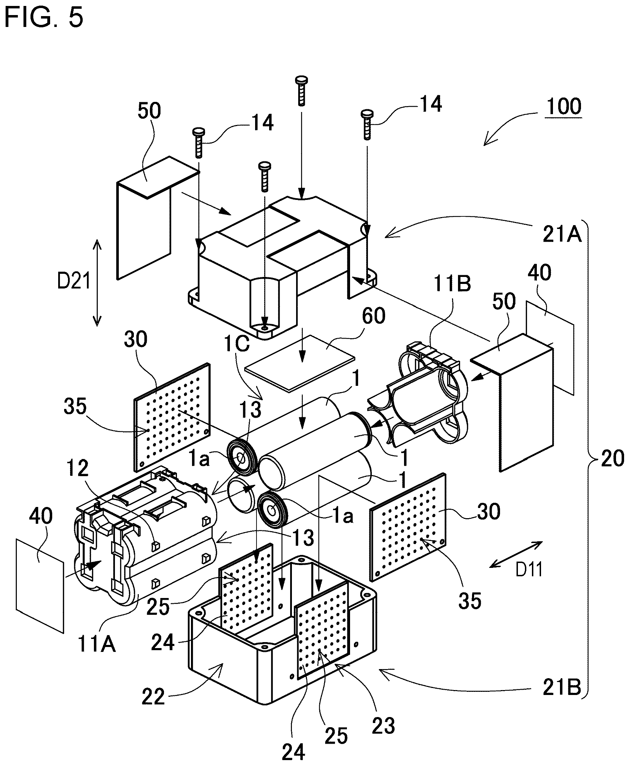

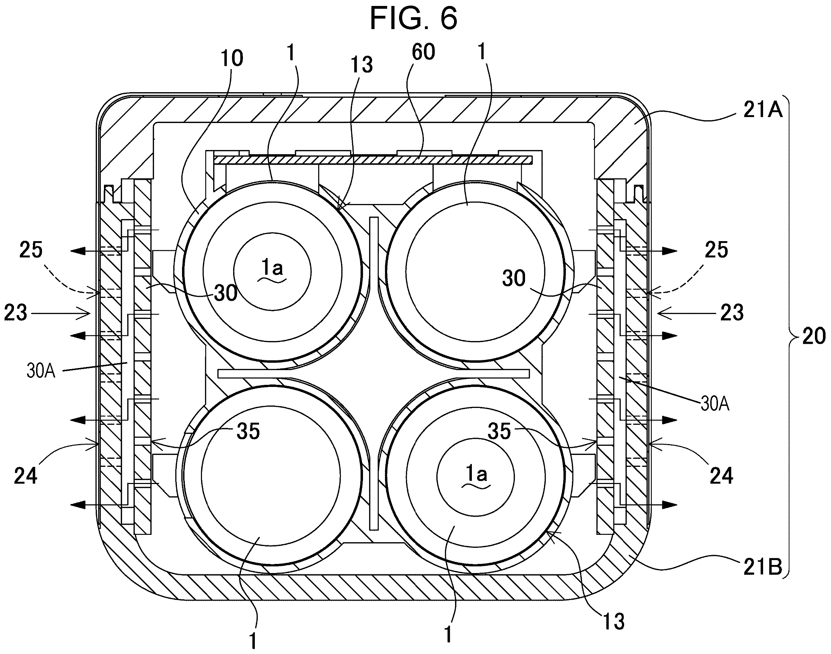

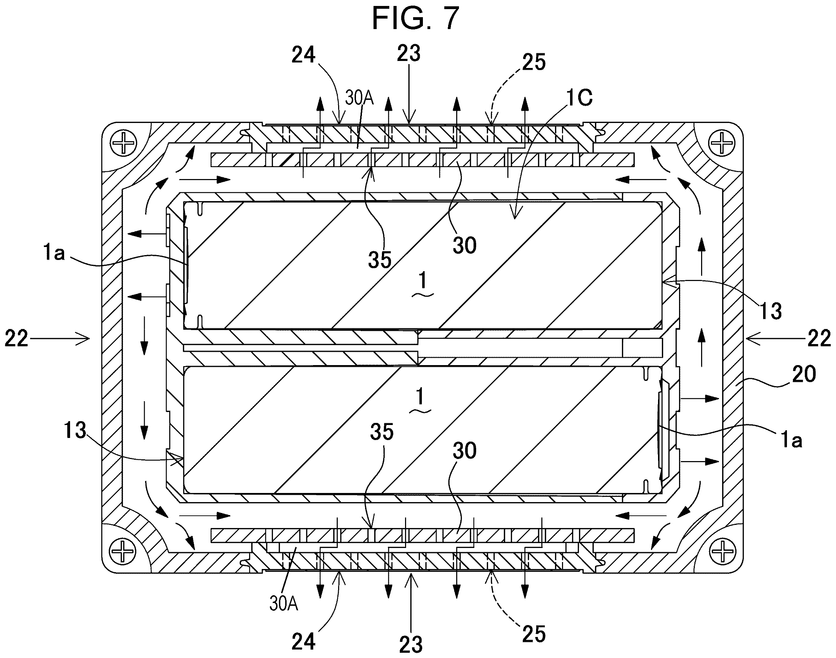

Battery pack 100 according to Exemplary Embodiment 1 of the present disclosure is illustrated in FIGS. 1-7. FIG. 1 is a perspective view of battery pack 100 according to the embodiment of the present disclosure. FIG. 2 is an exploded perspective view of battery pack 100 shown in FIG. 1 for illustrating a state in which label 50 is removed from battery pack 100. FIG. 3 is a side view of battery pack 100 shown in FIG. 2 for illustrating a state in which first case 21A and second case 21B of battery pack 100 are disassembled. FIG. 4 is an exploded perspective view of battery pack 100 shown in FIG. 1. FIG. 5 is an exploded perspective view of battery pack 100 shown in FIG. 4 in which battery holder 10 is disassembled. FIG. 6 is a vertical cross-sectional view of battery pack 100 along a line VI-VI shown in FIG. 1. FIG. 7 is a horizontal cross-sectional view of battery pack 100 along a line VII-VII shown in FIG. 1. Battery pack 100 illustrated in these figures includes at least one secondary battery cell 1, housing 20, and fire-resistant plate 40.

Each secondary battery cell 1 has surface 1a including a safety valve. Surface 1a is preferably a terminal surface on which an electrode terminal, such as a positive electrode, is provided. Housing 20 accommodates at least one secondary battery cell 1. Housing 20 is divided into first case 21A and second case 21B as illustrated in FIG. 2 and FIG. 3. A joint at which a joint surface or a mating surface between first case 21A and second case 21B is exposed to the surface of an exterior case is referred to as parting line PL. Furthermore, housing 20 includes a pair of side surfaces 23 each of which includes hole region 24 having first through-holes 25 provided therein; and fire-resistant-plate-disposition surface 22 at which fire-resistant plate 40 is disposed inside the housing. Each of side surfaces 23 intersects fire-resistant-plate-disposition surface 22 at respective one of both sides fire-resistant-plate-disposition surface 22, as illustrated in FIG. 4 and FIG. 5. Fire-resistant plate 40 is disposed inside housing 20 to face surface 1a. Parting line PL provided in fire-resistant-plate-disposition surface 22 joins first case 21A to second case 21B, and is positioned at a midpoint away from corners of fire-resistant-plate-disposition surface 22. On the other hand, parting line PL is positioned in each side surface 23 along a perimeter of hole region 24. Thus, parting line PL dividing housing 20 is positioned away from corners of the exterior case, whereby, if internal pressure of battery pack 100 becomes high, the risk of the breakage of housing 20 due to high pressure gas gathering in the corners can be reduced, meanwhile parting line PL does not cross hole region 24, whereby the risk of the breakage at the time of discharging internal high pressure gas through hole region 24 can also be reduced.

A point of the present disclosure will be described below. If high-temperature, high-pressure gas is generated or a secondary battery cell catches fire due to thermal runaway or the like of the secondary battery cell inside a battery pack, thermal energy other than flames needs to be discharged to the outside of an exterior case to prevent fire leakage in which flames leak to the outside from the exterior case. For example, it is conceivable that, like battery packs 800 and 900 of Comparative Examples 1 and 2 illustrated in FIG. 8 and FIG. 9, flame-discharge units 824 and 924 each including plural flame extinguishing holes 825 and 925 are provided in side surfaces of exterior cases 820 and 920. This configuration allows high temperature gas inside battery packs 800 and 900 to be discharged little by little from flame extinguishing holes 825 and 925 to the outside, whereby flame leakage can be prevented.

However, in the case where parting line PL as a joint in an exterior case, as in battery pack 800 illustrated in FIG. 8, divides smoke-discharge unit 824, there is a risk of breakage of parting line PL due to an internal pressure (in a portion illustrated with "×" in FIG. 8). To prevent the breakage, it is conceivable that a material to constitute flame-discharge unit 824 is molded in one piece. In other words, parting line PL cannot be provided in the flame-discharge unit.

However, when parting line PL is provided to an upper part of exterior case 920 as in battery pack 900 illustrated in FIG. 9, parting line PL is closer to corners of box-shaped exterior case 920. In this case, thermal energy convected inside exterior case 920 tends to concentrate on the corners without an escape. Hence, in the case that parting line PL is provided near the corners, there is a possibility that exterior case 920 is broken at parting line PL (a portion illustrated with "×" in FIG. 9) and fire leakage occurs therefrom. In particular, in the case of using a secondary battery cell including a cylindrical exterior can, an electrode terminal is commonly provided in an end surface of the exterior can, and a safety valve is often provided to the electrode terminal. Furthermore, the exterior can is often disposed inside the exterior case so that the end surface of the exterior can of the secondary battery cell is positioned on the longitudinal end surface side of the exterior case. Thus, when the internal pressure of the secondary battery cell increases, the safety valve opens to inject high-temperature, high-pressure gas, the inside of the exterior case on the end surface side thereof is directly exposed to a high-temperature, high-pressure environment, and accordingly, pressure tends to increase due to the high-temperature, high-pressure gas concentrated on the corners. When the parting line is present there, the risk of breakage increases. Even in the case that the parting line is provided in the lower part, the same event may arise. As described above, there is a possibility that, when the parting line is positioned in the middle, fire leakage occurs, or when the position of the parting line is provided in the upper or lower part, fire leakage occurs in the end surface.

In view of the above-described circumstances, the present inventors have studied a battery pack configured to be capable of preventing fire leakage from a side surface or an end surface of a housing. As a result, the present inventors conceived a battery pack having a new configuration capable of efficiently preventing fire leakage by not keeping the position of parting line PL constant in the entirety of the perimeter of the housing, but changing the position of the parting line PL between the side surface and the end surface. Hereinafter, the battery pack will be described in detail.

Battery pack 100 illustrated in FIGS. 1-7 includes battery holder 10, housing 20, a pair of fire-resistant plates 40, and a pair of through-hole plates 30. Housing 20 accommodates battery holder 10 therein.

### Label 50

Label 50 is stuck onto side surface 23 of housing 20. Label 50 is placed on hole region 24. First through-holes 25 are closed by label 50 to prevent foreign substances from entering housing 20 through first through-holes 25. When internal pressure of battery pack 100 increases, label 50 is broken by the increased internal pressure of housing 20, and first through-holes 25 open to the outside, whereby the high pressure gas is discharged to the outside of housing 20 through first through-holes 25. Information about housing 20, a logo, and the like may be suitably printed on a surface of label 50. Label 50 is preferably made of a sheet, such as a paper sheet, configured to be broken at high pressure.

In examples shown in FIG. 1 and FIG. 2, two labels 50 are stuck onto side surfaces 23, respectively. Each label 50 is bent and stuck onto housing 20 from the top surface thereof to side surface 23. A single label may be bent in the U-shape and stuck to cover the right and left side surfaces of the housing.

### Housing 20

Housing 20 to accommodate battery holder 10 therein has a box shape. In the examples shown in FIG. 1 and FIG. 2, housing 20 has a rectangular parallelepiped shape having long sides extending in one direction, but may have a cubic shape. As illustrated in FIG. 4, FIG. 5, and FIG. 7, housing 20 has a rectangular parallelepiped shape having long sides extending in the direction of the exterior can of secondary battery cells 1 so as to fit the shape of battery block 1c including a combination of four secondary battery cells 1.

In examples shown in FIG. 3, FIG. 5, and FIG. 7, housing 20 is divided into two cases, namely, first case 21A and second case 21B. Battery holder 10 is sandwiched by first case 21A and second case 21B from the upper and lower sides and thereby accommodated. Dividing direction D21 in which housing 20 is divided into first case 21A and second case 21B is perpendicular to dividing direction D11 in which battery holder 10 is divided into sub-holders 11A and 11B, thereby enhancing resistance against impact. Each of first case 21A and second case 21B is made of a material having excellent insulating properties, for example, resin such as polycarbonate or ABS. First case 21A and second case 21B are fixed by, e.g., screwing bolt 14 at four corners in the plan view.

### First Case 21A, Second Case 21B

In housing 20, first case 21A and second case 21B do not have symmetrical shapes but have asymmetrical shapes. In other words, a middle portion of each side surface 23 of housing 20 first case 21A is largely recessed, meanwhile second case 21B projects along the recess. Specifically, as illustrated in, for example, FIG. 1 and FIG. 2, parting line PL as the joint between first case 21A and second case 21B is positioned in the middle of the height direction in the end surfaces of housing 20. As illustrated in, e.g., FIG. 3, an end portion of parting line PL is positioned in each side surface 23 of housing 20 in the height direction while a middle portion thereof and is bent toward the top surface side to have a step stool shape. Thus, first case 21A and second case 21B have side surfaces 23 with different shapes, and hole region 24 is integrally provided in the second case 21B so as to reduce the risk of breakage when hole region 24 is exposed to high pressure gas.

### First Through-holes 25

Each of hole regions 24 is formed in respective one of side walls of second case 21B. Each hole region 24 has plural first through-holes 25 passing through the region and arranged in constant pitches. First through-holes 25 having excessively large size do not sufficiently decrease the temperature of high-temperature, high-pressure gas, and accordingly provide a possibility of flame leakage from hole region 24. In contrast, first through-holes 25 having excessively small size or an excessively small number of first through-holes 25 do not allow the pressure of high-temperature, high-pressure gas to be promptly released to the outside of housing 20, whereby the internal pressure increases and the risk of breakage increases. Therefore, the hole size and the number of first through-holes 25, that is, the total area of openings is adjusted appropriately to allow high pressure gas to be discharged in a predetermined time in accordance with, e.g., the performance and the number of secondary battery cells 1 to be used, the pressure of high pressure gas assumed, and the strength of housing 20. As an example, the opening diameter of first through-holes 25 ranges from 0.5 mm to 2 mm, and is preferably 1 mm.

### Hole Region 24

Hole region 24 is formed unitarily with second case 21B. Hole region 24 is thus formed of another member to avoid the generation of a joint, that is, the parting line, whereby an event of fire leakage from the parting line can be avoided.

### Margin

In each of side surfaces 23, hole region 24 is disposed with a margin provided along the perimeter of hole region 24. A position of parting line PL is changed in the margin from the middle toward the top surface. In other words, hole region 24 is provided at the center of each of side cases 23 of housing 20, and parting line PL is disposed along the upper side of hole region 24, thus preventing parting line PL from crossing the middle of hole region 24, and hole region 24 is unitarily integrally with second case 21B to secure strength. On the other hand, in the case that parting line PL is closer to the corners, the pressure of high-temperature, high-pressure gas concentrated on the corners causes a risk of breakage from parting line PL. Therefore, on the end surface side, that is, in fire-resistant-plate-disposition surface 22, parting line PL is positioned in the middle of the height direction. Furthermore, parting line PL extends continuously from the end surface of housing 20 to side surface 23 through the margin. In other words, in side surface 23 of housing 20, parting line PL positioned in the middle of the height direction on the end surface side of housing 20 is kept horizontally extending in the middle from the edge to the margin portion of side surface 23, and bent upward along the side of hole region 24, and extends horizontally again at the upper side of hole region 24.

Each of margins M1 provided on respective one of the upper and lower sides of hole region 24 may have a width different from that of each of margins M2 provided on respective one of the left and right sides of hole region 24. The width of each margin M2 provided on the left or right side is preferably larger than the width of each margin M1 provided on the upper or lower side. In this configuration, until high-pressure gas concentrated on the corners of housing 20 reaches hole region 24, that is, in a region of each of left and right margins M2, parting line PL is positioned in the middle to enhance the rigidity of first case 21A. After the high-pressure gas reaches hole region 24, the high-pressure gas is released to the outside through first through-holes 25, and accordingly pressure decreases, whereby, even when parting line PL is positioned closer to the corners, a concern in terms of strength can be reduced. For example, the width of each margin M1 provided on the upper or lower side ranges from 5% to 15% with respect to the height of housing 20. The width of each margin M2 provided on the left or right side ranges from 10% to 20% with respect to the length of housing 20.

### Parting Line PL

In the example in FIG. 3 and other figures, parting line PL is a straight line in fire-resistant-plate-disposition surface 22 and is bent in each of the pair of side surfaces 23 and connected continuously with the straight line. In end surfaces of housing 20, parting line PL is preferably positioned in the middle of a longitudinal direction, namely, dividing direction D21. In contrast, in side surfaces 23 of housing 20, a shape of parting line PL preferably changes along a step stool shape starting in the middle of the longitudinal direction.

### Fire-Resistant Plate 40

Fire-resistant plate 40 is disposed inside housing 20 on fire-resistant-plate-disposition surface 22. Fire-resistant-plate-disposition surface 22 is a surface out of inner surfaces of housing 20, the surface facing surface 1a of secondary battery cell 1, that is, a terminal surface. As illustrated in the exploded perspective view of FIG. 5, in an example in which four secondary battery cells 1 are disposed such that terminal surfaces are not aligned in both the upper-and-lower direction and left-and-right direction, in other words, the orientations of secondary battery cells 1 adjacent to each other are opposite to each other, both a front side and a rear side of battery block 1c serve as terminal surfaces. Hence, fire-resistant-plate-disposition surface 22 is on the inner side of paired front and rear end surfaces of housing 20. Thus, fire-resistant plate 40 is disposed on each of fire-resistant-plate-disposition surfaces 22. In the case that terminal surfaces of secondary battery cells are disposed to be aligned with only one surface of the battery block, the fire-resistant plate may be disposed only on the terminal surfaces, that is, only on one surface of the battery block. Thus, fire-resistant plate 40 is disposed on the terminal surfaces so as to avoid, as illustrated in FIG. 7, when high-pressure gas is generated inside battery pack 100, an event in which the high-pressure gas is discharged from fire-resistant-plate-disposition surface 22, that is, the end surface side of housing 20. The high-pressure gas is guided toward side surface 23 along a wall inside housing 20, and released through hole region 24 with first through-holes 25 passing through side surfaces 23. In other words, fire-resistant plate 40 is disposed on end surfaces inside housing 20, thereby regulating the discharge direction of high-pressure gas toward side surfaces 23.

Each fire-resistant plate 40 has a size in agreement with the size of fire-resistant-plate-disposition surface 22 as an internal surface of housing 20. Furthermore, each fire-resistant plate 40 has a plate shape with a constant thickness. Fire-resistant plate 40 is made of a fire-resistant, burning-resistant material, preferably an inorganic material, for example, a mineral-based material, such as mica. Mica has high noncombustibility, high noninflammability, and excellent insulating properties, and is inexpensive, and hence preferably used as a member having heat resistance and insulating properties. Without being burned or melted by discharged gas and flames injected from battery cell 1, fire-resistant plate 40 excellent in heat resistance prevents the discharged gas and the flames from passing through a heat resistant wall and penetrating the exterior case. As a material of fire-resistant plate 40, a heat-resistant plate that is not melted by discharged gas injected by an exhaust valve is preferably used. An inorganic plate formed by an inorganic fiber aggregate in the shape of a sheet or a plate or a heat-resistant plate formed by embedding inorganic fibers in plastic can be used. Furthermore, for example, a mica plate, an inorganic plate formed by molding an inorganic material into a plate, or a metal plate can be used. Furthermore, a heat-resistant plate formed by molding a plastic having excellent heat resistance, for example, thermoplastic resin such as nylon resin and fluoroplastic, into a plate can be used. Furthermore, a heat-resistant plate formed by molding a plastic having more excellent heat resistance, such as silicon resin and polyimide resin, into a plate.

### Through-Hole Plate 30

Through-hole plate 30 is provided inside each side surface 23 of housing 20. Through-hole plate 30 has a plate shape along hole region 24. Through-hole plate 30 is made of a material having heat resistance and rigidity. Through-hole plate 30 is preferably made of a metal plate, such as an aluminum, copper, or stainless steel plate.

### Second Through-Holes 35

Second through-holes 35 pass through each of through-hole plates 30. As illustrated in the vertical cross-sectional view of FIG. 6 and the horizontal cross-sectional view of FIG. 7, first through-holes 25 deviate from second through-holes 35. In other words, openings of first through-holes 25 do not overlap openings of second through-holes 35. In accordance with the present embodiment, the openings of first through-holes 25 do not overlap the openings of second through-holes 35 when viewed in a direction perpendicular to side surfaces 23 of housing 20. Gap 30A is provided between through-hole plate 30 and side surface 23 of second case 21B of housing 20. Through-hole plate 30 is thus disposed on each of side surfaces 23 of housing 20 so as to overlap hole region 24, and through-hole plate 30 is disposed such that second through-holes 35 deviate from first through-holes 25, whereby, if any of secondary battery cells 1 accommodated in battery pack 100 catches fire, the resultant flames pass through second through-holes 35 and hit on side surface 23 of housing 20, and thereby can be effectively prevented from leaking directly to the outside of battery pack 100. At the same time, gas generated inside housing 20 is discharged to the outside of housing 20 through second through-holes 35, gap 30A, and first through-holes 25.

To allow first through-holes 25 to deviate from second through-holes 35 so as not overlap second through-holes 35, pitches of first through-holes 25 are preferably identical to pitches of second through-holes 35. For example, the pitches of first through-holes 25 range from 3 mm to 6 mm, and is preferably 5 mm in both of the vertical and horizontal directions. The opening diameter of second through-hole 35 is preferably the same as first through-hole 25. Through-hole plate 30 is thus provided, whereby, if high-pressure gas is generated inside battery pack 100, thus-reinforced paired side surfaces 23 prevent hole region 24 from being broken by the high-pressure gas. In addition, the high-pressure gas is discharged to the outside through second through-holes 35, whereby heat and pressure are reduced. Second through-holes 35 deviate from first through-holes 25, whereby high-pressure gas is weakened and discharged to the outside, and thus flame leakage to the outside can be substantially prevented.

### Battery Holder 10

The outer dimensions of battery holder 10 are smaller than the inner dimensions of housing 20 so that battery holder 10 is accommodated in housing 20. A plurality of projections 12 is formed in a surface of battery holder 10. Under a state in which battery holder 10 is accommodated in housing 20, projections 12 project from the surface of battery holder 10 toward the inner surface side of housing 20. In the example of FIG. 4, four projections 12 in total are formed in four corners of battery holder 10, respectively. Projections 12 are formed integrally with battery holder 10.

The exploded perspective view of battery holder 10 is illustrated in g. Battery holder 10 holds secondary battery cells 1 and substrate 60. Battery holder 10 in which secondary battery cells 1 and substrate 60 are set constitutes a core pack. Substrate 60 is laid on and fixed to one surface (the upper surface in the example of FIG. 5) of battery holder 10. Battery holder 10 holds secondary battery cells 1. Battery holder 10 is divided into two sub-holders 11A and 11B to sandwich and hold secondary battery cells 1 from the longitudinal direction by using sub-holders 11A and 11B. Sub-holder 11A forms cylindrical accommodation space 13 for accommodating secondary battery cells 1 therein. In the example of FIG. 5, four secondary battery cells 1 are stacked on top of each other in two rows and two columns. The number of the secondary battery cells and a stacking method thereof are not limited to the above-mentioned configuration, and three secondary battery cells or less or five secondary battery cells or more may be held. Furthermore, the secondary battery cells may not be stacked in two stages, but may be disposed in one stage, that is, in the same surface, or may be stacked in three stages or more. Alternatively, the secondary battery cells may be disposed in a matrix or may be disposed in a staggered configuration to arrange the secondary battery cells alternately. For example, the accommodation space is configured to have two stages, and the cylindrical center of the accommodation space at the upper stage and the cylindrical center thereof at the lower stage are displaced with respect to each other, whereby the thickness of the battery holder can be reduced. Furthermore, the secondary battery cells may be connected in the longitudinal direction. In this case, the secondary battery cells may be connected in the longitudinal direction and held in one battery holder, or alternatively a plurality of battery holders may be connected, which results in a configuration in which the secondary battery cells are connected in the longitudinal direction of the secondary battery cells. Thus, the number of the secondary battery cells is determined based on a required voltage and a required capacity of the battery pack. The configuration and the number of the secondary battery cells held in the battery holder or the number of the battery holders are appropriately designed. The battery holder 10 is made of a material having excellent insulating properties and heat resistance, for example, a polycarbonate ABC resin.

### Secondary Battery Cell 1

Each second battery cell 1 is a cylindrical secondary battery cell including a cylindrical external can. The cylindrical secondary battery cell has terminal surfaces at both ends thereof. One of the terminal surfaces includes a safety valve. The safety valve is configured to open when the internal pressure of the external can increases, and thereby releases gas present inside. A safety valve is commonly provided on a positive electrode side, but, in the present disclosure, the safety valve is not limited to be positioned on the positive electrode side, but may be positioned at another place, for example, on the negative electrode side.

As such secondary battery cell 1, a cylindrical lithium-ion secondary battery can be preferably used. However, the battery pack according to the present disclosure does not limit the secondary battery cell to a cylindrical battery, and also does not limit the secondary battery cell to a lithium-ion secondary battery. Any chargeable battery such as a nickel-hydride battery or a nickel-cadmium battery can be used as the secondary battery cell.

### Lead Plate

A lead plate is fixed to an end surface of secondary battery cell 1. Secondary battery cells 1 are connected in series and/or parallel to none another via the lead plate. In the example of FIG. 5, four secondary battery cells 1 are connected in series to one another, that is, four in-line cells, but, two secondary battery cells 1 may be connected in series and two secondary battery cells 1 may be connected in parallel, or alternatively four secondary battery cells 1 may be connected in parallel. The lead plate is made of a metal plate and is welded to secondary battery cells 1. A lead positioning guide along the outer form of the lead plate is formed in the inner surface of battery holder 10 so as to dispose the lead plate at a predetermined position. The lead plate is disposed not on the inner surface of the battery holder, but on the outer surface thereof. In this case, after the secondary battery cells are inserted into the accommodation space of the battery holder, the lead plate is fixed to the terminal surfaces of the secondary battery cells exposed from the battery holder. The output of battery block 1c including secondary battery cells 1 connected in series or parallel to one another via the lead plate is produced from battery pack 100.

Furthermore, the top surface of battery holder 10 is a mounting surface on which substrate 60 is mounted. A frame for holding substrate 60 may be formed in the mounting surface. Alternatively, a substrate holder for holding the substrate may be separately provided.

### Substrate 60

Electronic circuits, such as a voltage detecting circuit for detecting a total potential or an intermediate potential of a battery assembly in which secondary battery cells 1 are connected in series and/or parallel, a control circuit for controlling charge and discharge, and a safety circuit, are implemented in substrate 60. Substrate 60 is formed in a rectangular shape.

### INDUSTRIAL APPLICABILITY

A battery pack according to the present disclosure is preferably used as, for example, power sources for portable electric devices such as electric cleaners and electric tools. Alternatively, the battery pack can be suitably used as power source devices for mobile units, such as power-assisted bicycles and electric carts.

### REFERENCE MARKS IN THE DRAWINGS

100 battery pack
1 secondary battery cell
1c battery block
10 battery holder
11A, 11B sub-holder
12 projection
13 accommodation space
14 bolt
20 housing
21A first case
21B second case
22 fire-resistant-plate-disposition surface
23 side surface
24 hole region
25 first through-hole
30 through-hole plate
35 second through-hole
40 fire-resistant plate
50 label
60 substrate
800 battery pack
820 exterior case
824 flame-discharge unit
825 flame extinguishing hole
900 battery pack
920 exterior case
924 flame-discharge unit
925 flame extinguishing hole
PL parting line
M1 margin
M2 margin

## Claims

1. A battery pack comprising:
at least one secondary battery cell having a surface including a safety valve;
a housing including a first case and a second case into which the housing is divided, the housing accommodating the at least one secondary battery cell therein, the first case and the second case being joined to each other at a parting line; and
a fire-resistant plate disposed inside the housing and on a surface of the housing facing the surface of the at least one secondary battery cell, wherein
the housing includes:
a fire-resistant-plate-disposition surface on which the fire-resistant plate is disposed inside the housing; and
a hole region having a plurality of first through-holes provided therein, the hole region being provided in a pair of side surfaces of the housing intersecting the fire-resistant-plate-disposition surface at both sides of the fire-resistant-plate-disposition surface, respectively, and
the parting line is positioned at a middle of the fire-resistant-plate-disposition surface of the housing away from corners of the fire-resistant-plate-disposition surface of the housing, and positioned along a perimeter of the hole region in the each of the side surfaces of the housing.

2. The battery pack according to claim 1, wherein the hole region is provided in the second case.

3. The battery pack according to claim 2, wherein the each of the side surfaces of the housing includes a margin provided along the perimeter of the hole region.

4. The battery pack according to any of claims 1 to 3, wherein the parting line is a straight line in the fire-resistant-plate-disposition surface of the housing, and is bent in the each of the pair of side surfaces of the housing to be connected continuously with the straight line.

5. The battery pack according to any of claims 1 to 4, wherein the parting line is positioned at a middle of the fire-resistant-plate-disposition surface of the housing in a vertical direction.

6. The battery pack according to any of claims 1 to 5, further comprising
a pair of through-hole plates disposed away from the side surfaces inside the housing, respectively, wherein
each of the pair of through-hole plates has a plurality of second through-holes provided therein, the second through-holes deviating from the first through-holes.

7. The battery pack according to claim 6, wherein the pair of through-hole plates are made of metal plates.

8. The battery pack according to any of claims 1 to 7, further comprising a label disposed on one of the pair of side surfaces of the housing such that the label overlaps the hole region.

9. The battery pack according to any of claims 1 to 8, further comprising a battery holder holding the at least one secondary battery cell.

10. The battery pack according to any of claims 1 to 9, wherein the fire-resistant plate is made of mica.
